(19) **Europäisches Patentamt / European Patent Office / Office européen des brevets**

(11) **EP 3 652 515 B1**

(12) **EUROPEAN PATENT SPECIFICATION**

(45) Date of publication and mention
of the grant of the patent:
**06.04.2022  Bulletin 2022/14**

(21) Application number: **18755894.5**

(22) Date of filing: **10.07.2018**

(51) International Patent Classification (IPC):
**G01M 3/28** *(2006.01)*          **G01F 15/07** *(2006.01)*

(52) Cooperative Patent Classification (CPC):
**G01F 7/00; G01M 3/2807; G06Q 50/06;** G01D 4/00;
G01D 2204/12; G01D 2204/14; G01F 1/053;
G01F 3/08; G01F 15/001; Y04S 20/30

(86) International application number:
**PCT/IB2018/055070**

(87) International publication number:
**WO 2019/012418 (17.01.2019 Gazette 2019/03)**

(54) **WATER CONSUMPTION MANAGEMENT SYSTEM**

SYSTEM ZUR VERWALTUNG DES WASSERVERBRAUCHS

SYSTÈME DE GESTION DE CONSOMMATION D'EAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **10.07.2017  PCT/IB2017/054136**

(43) Date of publication of application:
**20.05.2020  Bulletin 2020/21**

(73) Proprietor: **Droople SA**
**1185 Mont-sur-Rolle (CH)**

(72) Inventor: **BOUZERDA, Ramzi**
**1185 Mont-sur-Rolle (CH)**

(74) Representative: **P&TS SA (AG, Ltd.)**
**Avenue J.-J. Rousseau 4**
**P.O. Box 2848**
**2001 Neuchâtel (CH)**

(56) References cited:
**US-A1- 2009 293 189     US-A1- 2016 076 909
US-A1- 2016 129 464     US-B2- 9 019 120**

# Description

## Field of invention

This invention relates to the management of water consumption within a specific area, such as an apartment, a building or more generally an area that includes several end points where water is distributed.

## Background

The ability to effectively monitor the consumption is an important part of water management. Water consumption measurement is well known. Generally, there is one single point of metering located at the entry point of the building. This arrangement generates rough data, does not enable consumers to get real-time feedback locally or at any point of use, actively monitors their consumption globally and then adapt the behavior of the house inhabitants accordingly. With one single measure, water providers cannot i) invoice precisely the water consumption per apartment, ii) infer the demand/consumption trends with precision of an area of buildings under management for planning / forecasting purposes, reducing headroom advantageously. Efforts have been made to solve some of these issues, for instance by fixing water metering devices in each apartment of the building, with the objective to adapt the cost to every household consumption instead of distributing the costs on an average basis. Problems however remain. It is for instance not possible to know the water consumption at each endpoint within an apartment. Consequently, it is not possible for the consumer to monitor or to immediately infer his or her water consumption at a specific endpoint. Furthermore, there is a risk of incorrect water consumption measurement if leaks are located between the entry point (i.e. the metering point) and the end point or if there is, for instance, a leaking faucet at the end point.

The document US2016/076909 discloses a water consumption management system for a specific area according to the state of the art.

## General description of the invention

The present invention improves the water consumption management by departing from the conventional approach of measuring water demand at a single point (i.e. the water entry) in an area comprising several end points and at sporadic intervals. Instead, according to the invention, water demand may be continuously metered and monitored at each end point where water, hot or cold, is distributed.

More precisely, the invention concerns a water consumption management system for a specific area, such as an apartment, a building or more generally an area that includes several end points where water is distributed; said system comprising an interconnected network of sensors that are adapted to measure water consumption at each end point; said network being connected to a data processing unit and to at least one display element that provides an information on the water consumption at each end point of said specific area wherein at least some sensors comprise each a turbine arranged to measure first flow rates and a rotating piston arranged to measure second flow rates, wherein the second flow rates are higher than first flow rates, and wherein said turbine is located in the center of the rotating piston.

With the system according to the invention one can obtain a very detailed information in real-time on where, when, how much and at which temperature in the building, water has been consumed. The system according to the invention is based on a network of sensors (e.g. IoT devices) measuring the water consumption, for instance the water output of each tap, the water input of dishwashers, washing machines, head showers or flushes, i.e. on any water endpoint of the building. More generally, the sensors used in the present invention can measure any water end point of interest, detect leaks by either detecting abnormal activity such as a leaking faucet or simply comparing their nonactivity with the single-entry meter's activity. This setup advantageously allows data analytics on water consumption to help the house inhabitants to adapt their behavior to reduce their water needs and prevent flaws and damages. The system can be used either in a standalone mode where the users obtain an immediate feedback locally on each device with the volume and the temperature of the water they consume or in a remote mode where the users obtain a consolidated view of the consumption used through the devices installed on the outputs, both at any point of time.

The vast amount of fine-grained data analytics on water consumption collected through the platform offers several advantages, in particular:

- it allows the end-user to interact with the devices to set thresholds, activate alarm if a volume of water is reached or if a faucet has not been closed, analyze usage patterns, benchmark his usage with similar occupants of a house or facility as their profile are on the cloud as well (single person, couple, family of 4, family of 6, etc.)
- it allows water suppliers to forecast the supply of water more accurately, to reduce headroom adequately, and to ensure constant pressure in the water network under management when peaks occur. In that case, big data capabilities provided by a machine learning cloud-based server will be used, to derive patterns and improve usage predictions.
- it allows water governing bodies to enforce sustainable water consumption engagements through dynamic policies instead of applying unique tariffs on bad or good behaviors unfairly..
- it allows insurers to prevent flaws due to leaks in an apartment or a building or a facility.
- it allows Airbnb hosts to precisely invoice hot and cold-water usage for their visitors.

### Detailed description of the Invention

The invention will be better understood in the present chapter, with some illustrated examples. Of course the invention is not limited to those examples.

### Brief Description of the Drawings

FIG. 1        schematically shows an exemplary embodiment of the invention

FIG. 2A      shows an exemplary general configuration of a water sensor

FIG. 2B      shows a split display that may be used with the device of figure 2A

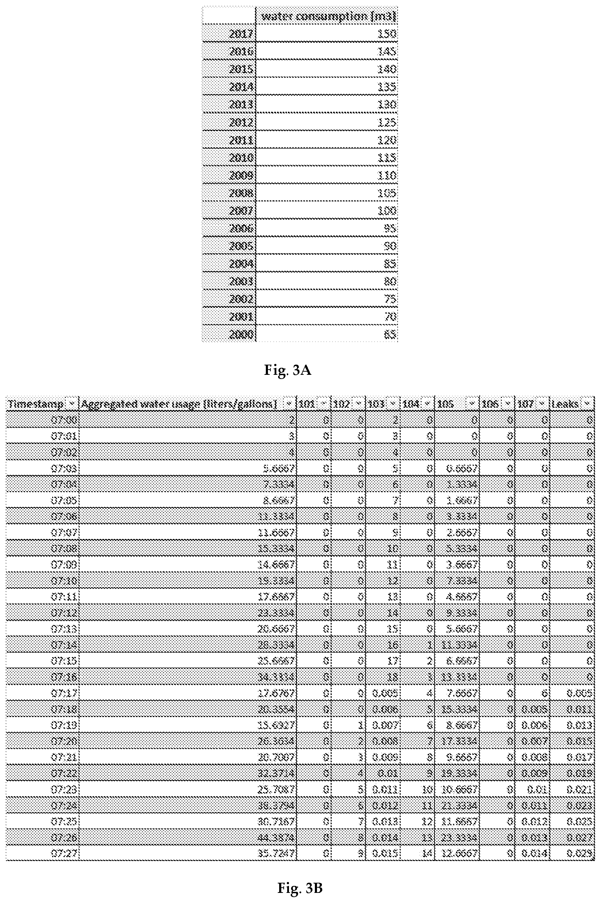

FIG. 3A      shows exemplary water usage vs. time data for a standard single entry

FIG. 3B      shows exemplary water usage vs. time data for a system according to the invention

FIG. 4        shows a block diagram relating to water analysis and prediction according to this invention

FIG. 5        shows an example of an application for an end-user

FIG. 6        shows an example of a water sensor

FIG. 7        shows the shunt position of the rotating piston in the device of figure 6.

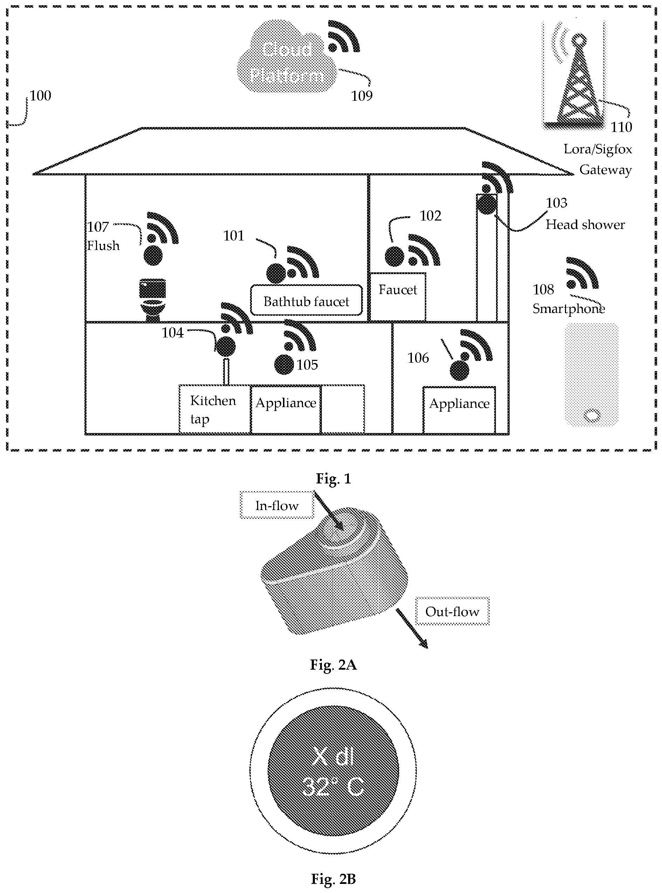

The system illustrated on figure 1 comprises a set of IoT sensors (101 to 107). The user can precisely monitor the volume flowing through each water end point and see the data displayed at each point of use such a kitchen tap. Knowing the temperature of the water, the algorithm can compute the energy required (kWh) to bring cold water to the desired temperature with very high precision over the time, provided cold-water temperature has been calibrated at set-up. This information can be very useful to pilot the heating processing of the boiler as the system can transmit to it when hot water will be required or not.

A sensor according to the present invention can be used in different manners, e.g.:

i. to fill a specific volume of water at a given temperature in any recipient without graduation (for cooking purpose for example);
ii. to fill a tank without graduation with a volume of any liquid;

iii. to mix different liquids with precise proportions and temperature;
iv. to activate other connected devices such as a pump or valve, all comprised in the same IoT network;
v. to detect leaks in the water network as a leaking flush for example;

In one embodiment of the invention the system measures and displays the use at each end point with indication of the temperature. In this configuration the system (100) includes:

1. One or more points of use IoT sensors with embedded or split display (101 to 107) disposed at said use locations where water output is provided, where each point of use sensor provides volume of water and temperature measurements and visual or auditory feedback of this information at its use location in a way that is independent from the two following components of this system; and
2. A machine learning cloud based server (109) where all the data are consolidated and stored to automatically analyze the new data points with previous collected data from any IoT in the network through a gateway (110) with Low Power Network protocols enabled such like LORA or SIGFOX ;
3. A smartphone application (108) where the consumer can see any of the IoT sensors in his network and, for example but not exhaustive, browse data history of the selected IoT sensor, interact with it to activate threshold alarms, stop water flowing when it reaches the desired volume, set goals for future consumption etc.

Features of Fig. 2A and 2B (detail of items 101 to 107 on Fig. 1):

• depending on the point of use, the IoT sensor has an embedded or a split display (2) providing many information such as volume, temperature, KWh, cost, units of measures, of water flowing through it. The user can change via the mobile app, the information displayed on the displays (e.g. for US, gallons and F° or the cost tariff depending on his country)
• the sensor, again depending on the point of use, is also available without display if its plugged between the water output and the pipe entry of the dishwasher for example. The data would be available on the app in that case.
• the sensor can produce a visual (LED) or auditory (buzzer) alarm when the desired volume or temperature of water or elapse time is reached.
• the display (2) is designed in such way that it provides easy-to-understand feedback on current water consumption, for example, it allows gamification or incentivizing depending on the user's consumption compared to his previous consumption (e.g. shower of yesterday compared to his shower of today) a peer group identified by the machine learning algorithm.

• the sensor, depending on the point of use, could be connected to a funnel to use it for mixing liquids

• the sensor is designed in such a way that it can fit any standard of pipe or tap, through a set of ring adapters (male <-> female, 3 ½ <-> 5 ¼ converter for example)

• the sensor is designed in such a way that it can be fixed to the tap, appliance, head shower or flush by any user without specific equipment, help of a plumber nor technical knowledge. To ease selfinstallation, how to videos will be available through the App for the end-user.

• the sensor can detect with an infrared sensor if the flowing water is used, i.e. activity is ongoing under the tap (e.g. hands are working under the tap) or only wasted in order to raise alarms to the end-user. This feature is present only where the sensor is used as a front device.

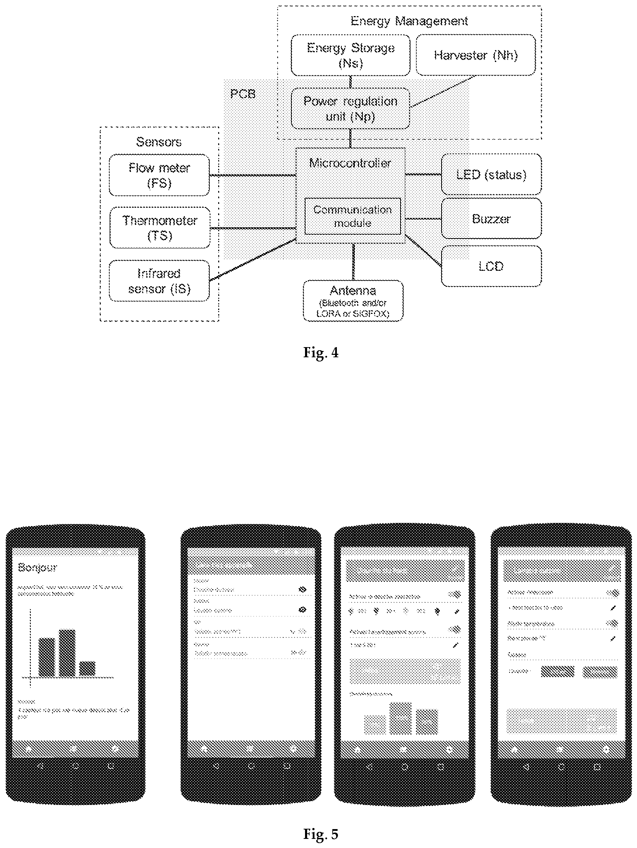

• The user can track the consumption at each sensor at any time through the smartphone application (Fig. 5). To do that, he must name each sensor depending on its location (e.g. kitchen tap, bathtub tap, etc.)

• The sensor could also send a wireless signal to other connected IoT devices such as a valve or a pump to send commands and adapt their behavior according to a specific threshold of volume or temperature.

Technical specifications of Fig. 2A and Fig. 2B, Fig. 4 and Fig 6. (detail of items 101 to 107 on Fig. 1):

• The fully integrated circuits are shown on the component diagram in the Fig.4, and can be complemented by any external components such as energy harvester, energy storage device and the target sensors such as flow, thermic sensors, infrared sensors but not only. In the Power Regulation Unit (Np), the target is maximizing overall efficiency (Ns = Nh x Np) to extract maximum energy from the energy harvester (harvesting source). As can be seen in Fig. 4, to achieve the highest Ns, not only the power efficiency of Power Regulation Unit (Np) should be maximized, but also cfficicncy of the harvester should be optimized to extract maximum power from the harvesting source (Nh). To maximize Nh, the operating point of the harvester should be close to its maximum power point during battery charging.

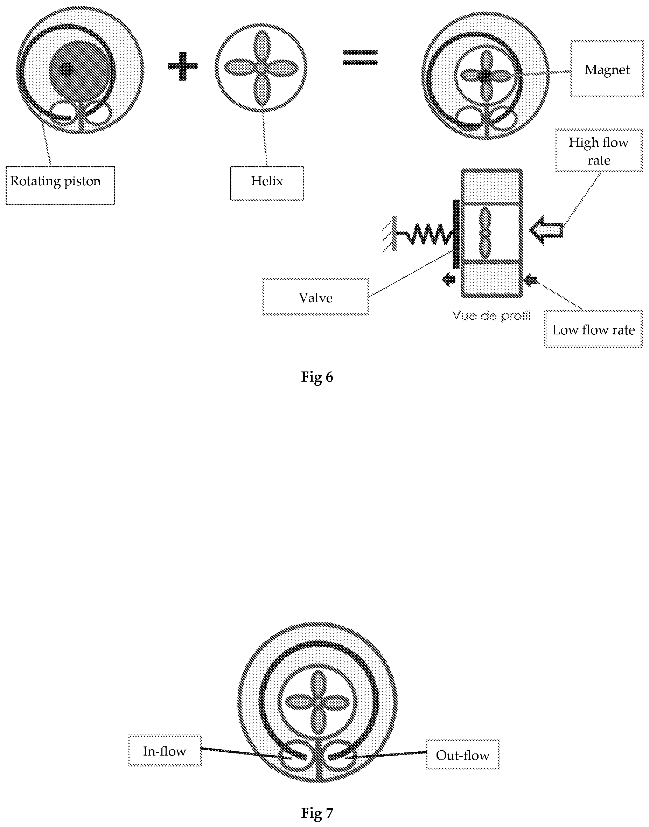

The Microcontroller in the Fig 6, not only tries to maximize Ns = Nh x Np by optimizing Nh and Np, but also reconfigures power-performance of sensing and data transmission circuits according to the harvested and/or stored energy. As can be seen in Fig 6, the Microcontroller reconfigures operating frequency, bias current and supply voltage of the mixed signal circuits in the sensor interface to optimize power-performance of this circuit. To minimize power consumption of all sensors, the Microcontroller not only reconfigures power-performance of the Power Regulation Unit and the Sensors, but also scales down the bias current of the sensors and operation duty cycle of the Antenna, i.e. the wireless transceiver (short range or long range).

• The system is designed in such a way that the bundled sensors are independent modules placed inside the device.

• As shown on Fig. 6, the sensor combines two types of flow metering to measure precisely and advantageously even a single drop leaking. It more precisely comprises a rotating piston, which is a chamber where volume of water is measured accurately to fit with low flow rates and a turbine to measure precisely high flow rates. As the rotating piston takes space inefficiently in its center, the apparatus is designed in such way that space is used to embed the turbine to reduce its size. Then, when water flows slowly through the device, it is measured by the rotating piston accurately. When the flow rate increases, the rotating piston reaches its saturation trigger and then the pressure occurring between the entry and the exit of the rotating piston opens the valve shown on Fig. 6. Then, the turbine starts its work as the flow rate is higher. A magnet is placed at purpose as the rotating piston could not work properly if the gradient of pressure between the entry and the exit is zero, i.e. the piston stops its rotation, consequently measuring the flow as shown on Fig. 7. The consequence is the chambers (entry and exit) are shunted, then the water can easily flows through without any measurement by the rotating piston. A solution to fix this problem is to design a magnet that attract the rotating piston against the boundaries as shown on Fig. 6. As long as the pressure against the chambers is less strong than the magnetization force, the system is perfectly designed to measure any type of flows. Moreover, when the pressure is greater than the magnetization force, the rotating piston acts as a safety valve.

• Tests have shown that the sensor of Fig. 6 is able to measure 2800mm3 per round of the piston once the volume of it is completely filled. In order to detect a leak of a flush, which is typically 1 liter per hour (the most common case of leakage), the frequency of rotation of the piston is around 0.1 Hz (1 round in ten seconds). For the minimal flow rate that triggers the turbine, the frequency of rotation would be around 6 Hz (6 rounds per second). In conclusion, the embodiment is able, in a prototype conditions to measure 0.2 liter per minute.

• The sensor Fig. 6 can be easily integrated in the body of a tap or of a head shower. To this effect the embodiment can be advantageously modified into a serial combination, i.e. the rotating piston afterward the turbine to reduce the diameter of the embodiment but it increases the length of it. (As shown on Fig. 6, the device uses a scavenger exploiting thermal gradients to generate energy based on the Seebeck effect. Due to the temperature difference between two different metals or semiconductors, a voltage drop is created across them. The core element of this kind of scavenger is the thermocouple. Two different materials are linked together, maintaining their junctions at different temperatures. The voltage generated across a thermocouple due to a temperature difference (T1 - T2) can be expressed as $V = \int_{T1}^{T2}[S_B(T) - S_A(T)]dT$ where $S_A$ and $S_B$ are the thermoelectric powers (or Seebeck coefficients) of the two materials A and B. Semiconductors typically have a high Seebeck coefficient and that is why these materials are commonly used for thermocouples. Moreover, n-type and p-type semiconductors have Seebeck coefficients with different signs; thus, if the two semiconductors composing a thermocouple have opposite doping, the contributions to the voltage reported in the equation above are summed. Energy scavengers exploiting the thermo-electrical effect consist of many thermocouples connected electrically in series and thermally in parallel to create a thermopile. Thermopiles are usually inserted in a thermal circuit. We assume that the thermopile is placed between the water flow (source) and the external ambient.

- As shown on Fig. 6, the device can also use another scavenger exploiting induction coil in order to generate energy from the rotating turbine as it is equipped with a magnet on its end.

- The sensor embeds an NiMH or lithium-ion (Li-ION) battery such as Thin film Li-ION battery or any advantageous super capacitor so it could be considered as a self-powered unit (6)

- the sensor also comprises a LED light (3) to indicate its wireless connection status and depending on the temperature of the water flowing, indicates a related color, red when its above 50°C, blue when it's under 10°C and green when it's between 10° and 50°C, or any other scale. This can be customized through the smartphone App

- All the point of use sensors can communicate with the smartphone application (107) through different protocols (Bluetooth, NFC, any other advantageous communication protocols) and via Low power network like LoRa or Sigfox with the cloud server (109).

- The sensor embeds a digital LCD or an EID (Electronic Ink) display (2) or any other advantageous display component like the. split display in Fig.2B to give feedback on the measures of the device or any other valuable information the user would like to see. The display receives data from the sensors via Bluetooth and it runs with a 10 years lifetime battery.

Data management capabilities of the SWMS solution

As discussed, data recorded from the adapters (101 to 107) may be sent to an electronic computing device (108), such as a mobile phone, tablet, laptop computer, desktop computer, smart TV, smart TV adapter, Voice assistant like Google Home or Amazon Alexa, music player and/or any other computing device with network connectivity. Thus, a user may access various statistics in the installed app from one or more water usage (e.g. shower session taken by the user) or at a dwelling of the user. These statistics may include, for example, the length of a shower (time), a volume of water used during the shower, and/or an average temperature and energy equivalent (KWh) of the water used during the shower. For example, when the device (101 to 107) is monitoring the shower temperature of water flowing through the device fixed between the pipe and the shower head, data may be collected and plotted on a temperature scale between 32° degrees Fahrenheit (0 degree Celsius) and 212-degree Fahrenheit (100 degrees Celsius), and within a reasonable range of 50 degrees Fahrenheit (10 degrees Celsius) and 150 degrees Fahrenheit (65.5 degrees Celsius). As per monitoring or measuring the rate of water flowing from a water source or through the shower head, data may be plotted and displayed on a mobile device showing flow between 0 gal/min (0 liter/hr) and 22712 liter/hr (100 gal/min), within a reasonable range of 454 liter/hr (0.2 gal/min) to 4542 liter/hr (20 gal/min) . After the shower has been finished, as indicated by a cessation of flow past the sensor, data may be communicated to the device regarding the total volume of water that has been used (e.g. 104,56 liters (23 gallons)) and the total duration of the shower (e.g. 8 minutes).

Given these statistics, the amount of money spent on a water and/or heating bill may also computed and displayed to the user. The amount may be extrapolated to yield an approximation of daily, weekly, monthly and/or yearly utility bills. Likewise, real time data from a user's utility bill may be inputted manually by the user or automatically populated from a utility bill paying account associated with the user or the physical address at which the devices are used. Going a step further, the application may incorporate a database including local utility providers as well as standard utility costs associated with a given geographic region. In this embodiment, the application and/or the device may communicate directly with the municipality or utility company in addition to our machine learning cloud-based server (109). In this regard, the utility company may be able to offer real-time incentives and savings to consumers for reducing their utility costs. In turn, the utility companies may receive incentives, grants, and/or other funding from local or federal government for reducing water consumption thereby reducing greenhouse emissions and a resulting ecological footprint.

The machine learning cloud-based server (109) is implemented to compute time series predictions (LTSM), but not only, to collect, analyze and automatically derive a water usage model which can be a statistical model of probability of a water draw vs. time or a suitable supervised machine learning algorithm or any other advantageous algorithm. Then, it can derive approximately an electrical consumption model (kWh) required to heat a specific volume of water at a given temperature) from previously acquired water usage data. The system is capable of actively monitoring and recording the building's water usage patterns to allow the consumer (i.e. homeowner or business or any entity exploiting a building or a facility) to adapt his behavior regarding his consumption profile, assuming that the consumer has installed the sensors at least one or at each point of water use like dishwasher, shower, laundry machines, flushes or any other point of interest.

Other information can also combined with the consumption data. This includes local weather, building occupant's calendar or any other information useful to mine the usage figures. For example, weather information can affect water usage since individuals will need more water during summer or hot water during winter or cold seasons. If the profile of the home's occupants is updated by the user in the App (108) (e.g. a new occupant, a new laundry machine, etc.), the algorithm can adapt the clustering of the consumer (i.e. from couple to family) or recommend consumption objectives adequately to the usage profile based on the peer benchmark.

Another interaction between the sensors and the app (108) enables enriching additional information provided by the smartphone, such as positioning data given by its GPS chip in order to determine the area of the building, its context in terms of water sourcing (e.g. hard or sweet water area) and any other enriching data.

The invention is of course not limited to those examples.

## Claims

1. Water consumption management system (100) for a specific area, such as an apartment, a building

   or more generally an area that includes several end points where water is distributed; said system (100) comprising an interconnected network of sensors that are adapted to measure water consumption at each end point; said network being connected to a data processing unit and to at least one display element that provides an information on the water consumption at each end point of said specific area **characterized in that** at least some sensors comprise each a turbine arranged to measure first flow rates and a rotating piston arranged to measure second flow rates, wherein the second flow rates are higher than first flow rates, and wherein said turbine is located in the center of the rotating piston.

2. System (100) according to claim 1, wherein said at least some sensors comprise each a valve wherein once the rotating piston reaches a saturation trigger, a pressure occurring between an entry and an exit of the rotating piston opens said valve so that the turbine starts to work.

3. System (100) according to one of claims 1 or 2, wherein said at least some sensors comprise each a magnet arranged so as to attract the rotating piston against boundaries of the sensors.

4. System (100) according to one of claims 1 to 3 wherein each end point comprises a display that is adapted to show the water consumption at said end point.

5. System (100) according to one of claims 1 to 4, wherein the sensors are arranged to send a wireless signal to a valve or a pump, so as to send commands and adapt the behavior of the valve or of the pump according to a specific threshold of volume or temperature.

6. System (100) according to any of the previous claims comprising a water temperature measuring element at each end point.

7. System (100) according to claim 6 comprising a water temperature display at each end point

8. System (100) according to claim 6 or 7 comprising a power regulation unit.

9. System (100) according to any of the previous claims that is adapted for detecting a leak

10. System (100) according to any of the previous claims comprising an alarm, that is triggered for instance when a certain quantity of water has been used or when a leak is detected.

## Patentansprüche

1. Wasserverbrauchsmanagementsystem (100) für ein spezifisches Gebiet wie eine Wohnung, ein Gebäude oder allgemeiner ein Gebiet, das mehrere Endpunkte umfasst, an denen Wasser verteilt wird; wobei erwähntes System (100) ein zusammenhängendes Netz von Sensoren aufweist, die dazu ausgelegt sind, Wasserverbrauch an jedem Endpunkt zu messen; wobei erwähntes Netz mit einer Datenverarbeitungseinheit und mit wenigstens einem Anzeigeelement, welches eine Information über den Wasserverbrauch an jedem Endpunkt des erwähnten spezifischen Gebiets bereitstellt, verbunden ist, **gekennzeichnet dadurch, dass**

wenigstens einige Sensoren je eine Turbine, die zum Messen erster Flussraten angeordnet ist, und einen Drehkolben, der zum Messen zweiter Flussraten angeordnet ist, aufweisen, wobei die zweiten Flussraten höher sind als die ersten Flussraten, und wobei erwähnte Turbine im Zentrum des Drehkolbens positioniert ist.

2. System (100) gemäss Anspruch 1, wobei erwähnte wenigstens einige Sensoren je ein Ventil aufweisen, wobei sobald der Drehkolben einen Sättigungsauslöser erreicht, öffnet ein Druck, der zwischen einem Eingang und einem Ausgang des Drehkolbens auftritt, erwähntes Ventil, so dass die Turbine anfängt, zu arbeiten.

3. System (100) gemäss einem der Ansprüche 1 oder 2, wobei erwähnte wenigstens einige Sensoren je einen Magneten aufweisen, der so angeordnet ist, dass er den Drehkolben gegen die Grenzflächen der Sensoren anzieht.

4. System (100) gemäss einem der Ansprüche 1 bis 3, wobei jeder Endpunkt eine Anzeige aufweist, die dazu ausgelegt ist, den Wasserverbrauch an erwähntem Endpunkt anzuzeigen.

5. System (100) gemäss einem der Ansprüche 1 bis 4, wobei die Sensoren angeordnet sind zum Senden eines Funksignals zu einem Ventil oder einer Pumpe, um Befehle zu senden und um das Verhalten des Ventils oder der Pumpe gemäss einem spezifischen Volumen- oder Temperaturschwellenwert anzupassen.

6. System (100) gemäss einem der vorherigen Ansprüche, ausweisend ein Wassertemperatur messendes Element an jedem Endpunkt.

7. System (100) gemäss Anspruch 6, aufweisend eine Wassertemperaturanzeige an jedem Endpunkt.

8. System (100) gemäss Anspruch 6 oder 7, aufweisend eine Kraftregulierungseinheit.

9. System (100) gemäss einem der vorherigen Ansprüche, das dazu ausgelegt ist, eine Undichtheit zu detektieren.

10. System (100) gemäss einem der vorherigen Ansprüche, aufweisend eine Alarmanlage, die beispielsweise aufgelöst wird, wenn eine bestimmte Menge an Wasser verwendet wurde oder wenn eine Undichtheit detektiert wird.

## Revendications

1. Système (100) de gestion de consommation d'eau pour une zone spécifique, telle qu'un appartement, un immeuble ou plus généralement une zone qui comprend plusieurs points d'extrémité où l'eau est distribuée; ledit système (100) comprenant un réseau interconnecté de capteurs qui sont adaptés pour mesurer la consommation d'eau à chaque point d'extrémité ; ledit réseau étant connecté à une unité de traitement de données et à au moins un élément d'affichage qui fournit une information sur la consommation d'eau à chaque point d'extrémité de ladite zone spécifique **caractérisé en ce que**

au moins certains capteurs comprennent chacun une turbine agencée pour mesurer des premiers débits et un piston rotatif agencé pour mesurer des seconds débits, dans lequel les seconds débits sont supérieurs aux premiers débits, et dans lequel ladite turbine est située au centre du piston rotatif.

2. Système (100) selon la revendication 1, dans lequel lesdits au moins certains capteurs comprennent chacun une vanne, dans lequel une fois que le piston rotatif atteint une détente de saturation, une pression se produisant entre une entrée et une sortie du piston rotatif ouvre ladite vanne de sorte que la turbine commence à fonctionner.

3. Système (100) selon l'une des revendications 1 ou 2, dans lequel lesdits au moins certains capteurs comprennent chacun un aimant disposé de manière à attirer le piston rotatif contre les limites des capteurs.

4. Système (100) selon l'une des revendications 1 à 3, dans lequel chaque point d'extrémité comprend un affichage qui est adapté pour indiquer la consommation d'eau audit point d'extrémité.

5. Système (100) selon l'une des revendications 1 à 4, dans lequel les capteurs sont agencés pour envoyer un signal sans fil à une vanne ou à une pompe, de manière à envoyer des commandes et à adapter le comportement de la vanne ou de la pompe en fonction d'un seuil spécifique de volume ou de température.

6. Système (100) selon l'une quelconque des revendications précédentes, comprenant un élément de mesure de la température de l'eau à chaque point d'extrémité.

7. Système (100) selon la revendication 6, comprenant un affichage de la température de l'eau à chaque point d'extrémité.

8. Système (100) selon la revendication 6 ou 7, comprenant une unité de régulation de puissance.

9. Système (100) selon l'une quelconque des revendications précédentes, qui est adapté pour détecter une fuite.

10. Système (100) selon l'une quelconque des revendications précédentes, comprenant une alarme, qui est déclenchée par exemple lorsqu'une certaine quantité d'eau a été utilisée ou lorsqu'une fuite est détectée.
par exemple lorsqu'une certaine quantité d'eau a été utilisée ou lorsqu'une fuite est détectée.

**Fig. 1**

**Fig. 2A**

**Fig. 2B**

| | water consumption [m3] |
|---|---|
| 2017 | 150 |
| 2016 | 145 |
| 2015 | 140 |
| 2014 | 135 |
| 2013 | 130 |
| 2012 | 125 |
| 2011 | 120 |
| 2010 | 115 |
| 2009 | 110 |
| 2008 | 105 |
| 2007 | 100 |
| 2006 | 95 |
| 2005 | 90 |
| 2004 | 85 |
| 2003 | 80 |
| 2002 | 75 |
| 2001 | 70 |
| 2000 | 65 |

Fig. 3A

| Timestamp | Aggregated water usage [liters/gallons] | 101 | 102 | 103 | 104 | 105 | 106 | 107 | Leaks |
|---|---|---|---|---|---|---|---|---|---|
| 07:00 | 2 | 0 | 0 | 2 | 0 | 0 | 0 | 0 | 0 |
| 07:01 | 3 | 0 | 0 | 3 | 0 | 0 | 0 | 0 | 0 |
| 07:02 | 4 | 0 | 0 | 4 | 0 | 0 | 0 | 0 | 0 |
| 07:03 | 5.6667 | 0 | 0 | 5 | 0 | 0.6667 | 0 | 0 | 0 |
| 07:04 | 7.3334 | 0 | 0 | 6 | 0 | 1.3334 | 0 | 0 | 0 |
| 07:05 | 8.6667 | 0 | 0 | 7 | 0 | 1.6667 | 0 | 0 | 0 |
| 07:06 | 11.3334 | 0 | 0 | 8 | 0 | 3.3334 | 0 | 0 | 0 |
| 07:07 | 11.6667 | 0 | 0 | 9 | 0 | 2.6667 | 0 | 0 | 0 |
| 07:08 | 15.3334 | 0 | 0 | 10 | 0 | 5.3334 | 0 | 0 | 0 |
| 07:09 | 14.6667 | 0 | 0 | 11 | 0 | 3.6667 | 0 | 0 | 0 |
| 07:10 | 19.3334 | 0 | 0 | 12 | 0 | 7.3334 | 0 | 0 | 0 |
| 07:11 | 17.6667 | 0 | 0 | 13 | 0 | 4.6667 | 0 | 0 | 0 |
| 07:12 | 23.3334 | 0 | 0 | 14 | 0 | 9.3334 | 0 | 0 | 0 |
| 07:13 | 20.6667 | 0 | 0 | 15 | 0 | 5.6667 | 0 | 0 | 0 |
| 07:14 | 26.3334 | 0 | 0 | 16 | 1 | 11.3334 | 0 | 0 | 0 |
| 07:15 | 25.6667 | 0 | 0 | 17 | 2 | 6.6667 | 0 | 0 | 0 |
| 07:16 | 34.3334 | 0 | 0 | 18 | 3 | 13.3334 | 0 | 0 | 0 |
| 07:17 | 17.6767 | 0 | 0 | 0.005 | 4 | 7.6667 | 0 | 6 | 0.005 |
| 07:18 | 20.3334 | 0 | 0 | 0.006 | 5 | 15.3334 | 0 | 0.005 | 0.011 |
| 07:19 | 15.6927 | 0 | 1 | 0.007 | 6 | 8.6667 | 0 | 0.006 | 0.013 |
| 07:20 | 26.3834 | 0 | 2 | 0.008 | 7 | 17.3334 | 0 | 0.007 | 0.015 |
| 07:21 | 20.7007 | 0 | 3 | 0.009 | 8 | 9.6667 | 0 | 0.008 | 0.017 |
| 07:22 | 33.3714 | 0 | 4 | 0.01 | 9 | 19.3334 | 0 | 0.009 | 0.019 |
| 07:23 | 25.7087 | 0 | 5 | 0.011 | 10 | 10.6667 | 0 | 0.01 | 0.021 |
| 07:24 | 38.3794 | 0 | 6 | 0.012 | 11 | 21.3334 | 0 | 0.011 | 0.023 |
| 07:25 | 30.7167 | 0 | 7 | 0.013 | 12 | 11.6667 | 0 | 0.012 | 0.025 |
| 07:26 | 44.3874 | 0 | 8 | 0.014 | 13 | 23.3334 | 0 | 0.013 | 0.027 |
| 07:27 | 35.7247 | 0 | 9 | 0.015 | 14 | 12.6667 | 0 | 0.014 | 0.029 |

Fig. 3B

Fig. 4

Fig. 5

**Fig 6**

**Fig 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016076909 A